# EUROPÄISCHE PATENTSCHRIFT

(11) **EP 4 313 365 B1**
(45) Veröffentlichungstag und Bekanntmachung des Hinweises auf die Patenterteilung: **22.01.2025**
(21) Anmeldenummer: 22713622.3
(22) Anmeldetag: 09.03.2022
(51) Int. Cl.: B01D 45/16, F02M 35/022, F02M 35/08, H01M 8/0662

(54) **WASSERABSCHEIDER MIT EINEM DROSSELELEMENT, VERWENDUNG EINES WASSERABSCHEIDERS UND BRENNSTOFFZELLENSYSTEM MIT EINEM WASSERABSCHEIDER**
WATER SEPARATOR WITH A THROTTLE ELEMENT, USE OF A WATER SEPARATOR AND FUEL CELL SYSTEM WITH A WATER SEPARATOR
SÉPARATEUR D'EAU AVEC UN ÉLÉMENT D'ÉTRANGLEMENT, UTILISATION D'UN SÉPARATEUR D'EAU ET SYSTÈME DE PILES À COMBUSTIBLE AVEC UN SÉPARATEUR D'EAU

(30) Priorität: 26.03.2021 DE 102021107639
(43) Veröffentlichungstag der Anmeldung: 07.02.2024
(73) Patentinhaber: MANN+HUMMEL GmbH, 71636 Ludwigsburg (DE)
(72) Erfinder: WEBER, Andreas, 71691 Freiberg (DE); NOCERA, Ettore, 74354 Besigheim (DE)
(74) Vertreter: Mann + Hummel Intellectual Property
(86) Internationale Anmeldenummer: PCT/EP2022/056040
(87) Internationale Veröffentlichungsnummer: WO 2022/200047

(56) Entgegenhaltungen:
- CN-A- 106 523 210
- DE-A1- 102015 015 715
- DE-A1- 102019 110 247
- US-A- 3 424 098
- US-A1- 2018 026 281

## Beschreibung

### Technisches Gebiet

Die Erfindung betrifft einen Wasserabscheider mit einem Drosselelement, eine Verwendung eines Wasserabscheiders und ein Brennstoffzellensystem mit einem Wasserabscheider.

### Stand der Technik

EP 1167743 B1 offenbart einen Wasserabscheider, der als Drallabscheider ausgebildet ist. Der Wasserabscheider umfasst ein Innenrohr und ein Außenrohr, welche in axialer Richtung aufeinander folgend angeordnet sind, wobei das Innenrohr mit einem axialen Abschnitt in das Außenrohr hineinragt und das Außenrohr über einen Wasserauslass verfügt, der tangential in Drallrichtung angeordnet ist.

CN 106 523 210 A, DE 10 2015 015715 A1, DE 10 2019 110247 A1 und US 2018/026281 A1 zeigen ebenfalls relevante Wasserabscheider.

### Offenbarung der Erfindung

Eine Aufgabe der Erfindung ist es, einen verbesserten Wasserabscheider zu schaffen. Eine weitere Aufgabe der Erfindung ist es, eine Verwendung eines Wasserabscheiders anzugeben.

Eine weitere Aufgabe besteht in der Schaffung eines Brennstoffzellensystems mit einem derartigen Wasserabscheider.

Die vorgenannten Aufgaben werden nach einem Aspekt der Erfindung gelöst mit einem Wasserabscheider, umfassend einen strömungsführenden Innenraum und einen Wasserauslass, der an den Innenraum angeschlossen ist, wobei der Wasserauslass ein strömungsführendes Drosselelement aufweist, das als Einlegeteil ausgebildet und formschlüssig und/oder kraftschlüssig in den Wasserauslass eingebettet ist.

Nach einem weiteren Aspekt der Erfindung werden die Aufgaben gelöst durch eine Verwendung eines Wasserabscheiders zur Gasstrombegrenzung in einer Drainageleitung.

Nach einem weiteren Aspekt der Erfindung werden die Aufgaben gelöst durch ein Brennstoffzellensystem mit einem Kathodenzuluftpfad und einem Kathodenabluftpfad einer Brennstoffzelleneinheit und mit wenigstens einem erfindungsgemäßen Wasserabscheider, wobei der wenigstens eine Wasserabscheider in dem Kathodenabluftpfad angeordnet und zur Luftstrombegrenzung in einem Drainagepfad des Wasserabscheiders vorgesehen ist.

Günstige Ausgestaltungen und Vorteile der Erfindung ergeben sich aus den weiteren Ansprüchen, der Beschreibung und der Zeichnung.

Es wird nach einem Aspekt der Erfindung ein Wasserabscheider vorgeschlagen, umfassend einen strömungsführenden Innenraum und einen Wasserauslass, der an den Innenraum angeschlossen ist, wobei der Wasserauslass ein strömungsführendes Drosselelement aufweist, das als Einlegeteil ausgebildet und formschlüssig und/oder kraftschlüssig in den Wasserauslass eingebettet ist.

Dadurch, dass das Einlegeteil in den Wasserauslass eingebettet ist, sind keine zusätzlichen Dichtungen oder Befestigungsmittel nötig, um das Drosselelement mit dem Wasserauslass zu verbinden. Dies ist kostengünstig. Zudem wird der Zusammenbau vereinfacht. Ferner ist dies günstig für die Lebensdauer des Drosselelements.

Vorteilhaft kann der Wasserabscheider aus Kunststoff gebildet sein. Vorzugsweise ist zumindest der Wasserauslass aus Kunststoff gebildet.

Vorteilhaft kann der Wasserabscheider als Drallabscheider ausgebildet sein, bei dem der Wasserauslass im bestimmungsgemäßen Zustand tangential in Drallrichtung angeordnet ist.

In einer alternativen Ausgestaltung kann der Wasserabscheider als Drallabscheider ausgebildet sein, bei dem der Wasserauslass radial nach außen und in einem Winkel zur Längsachse angeordnet ist.

Günstigerweise weist der Innenraum des Wasserabscheiders ein Innenrohr und ein Außenrohr auf, welche in axialer Richtung aufeinanderfolgend angeordnet sind, wobei das Innenrohr am Übergang zum Außenrohr einen kleineren Durchmesser aufweist, als das Außenrohr und das Außenrohr den Wasserauslass aufweist.

Gemäß einer günstigen Ausgestaltung des Wasserabscheiders kann das Drosselelement mittels eines Heißeinsatzverfahrens oder Spritzgussverfahrens in den Wasserauslass eingebettet sein.

Beim Heißeinsatzverfahren, auch als Heat-Set-Insert Verfahren bekannt, wird das Einlegeteil erhitzt und in einen Hohlraum des Wasserauslasses eingepresst. Die Temperatur des Einlegeteils schmilzt lokal den Kunststoff des Wasserauslasses auf. Nach dem Erstarren ist das Einlegeteil fest, insbesondere formschlüssig, mit dem Material des Wasserauslasses verbunden.

Beim Spritzgussverfahren oder Umspritzverfahren wird das Einlegeteil in das entsprechende Werkzeug eingelegt und mit dem Material, insbesondere Kunststoffmaterial, welches den Wasserauslass bzw. den Wasserabscheider bildet, umspritzt. Nach dem Erstarren des Kunststoffmaterials ist das Einlegeteil fest, insbesondere formschlüssig, zumindest teilweise mit dem Material des Wasserauslasses umgeben.

Alternativ sind andere Befestigungsmethoden denkbar, mit denen das Einlegeteil in den Wasserauslass eingebettet werden kann. Beispielsweise kann das Einlegeteil mit einem Außengewinde, insbesondere einem selbstschneidenden Außengewinde, versehen sein und in den Wasserauslass eingeschraubt sein.

Gemäß einer günstigen Ausgestaltung des Wasserabscheiders kann das Drosselelement eine Engstelle mit einem Durchmesser zwischen 1 mm und 4 mm, insbesondere zwischen 1,5 mm und 3 mm, aufweisen. Die Engstelle erlaubt den Austritt von Wasser, limitiert jedoch den Austritt des Gases, das im Wasserabscheider entwässert wird. Die Länge der Engstelle in Strömungsrichtung kann abhängig von dem beabsichtigten Einsatzgebiet und den dort herrschenden Rahmenbedingungen gewählt werden.

Vorteilhaft weist das strömungsführende Drosselelement, ausgebildet als Einlegeteil, in einem in Strömungsrichtung ersten Abschnitt einen sich verjüngenden, insbesondere konischen, Einströmquerschnitt auf, dem sich der eigentliche Drosselbereich mit geringem Durchmesser anschließt. Der Drosselbereich kann beispielsweise als ein im Verhältnis zum gesamten Drosselelement kurzer, zylindrischer Kanalabschnitt ausgebildet sein. Stromabwärts des Drosselbereichs kann sich ein Kanalabschnitt mit sich aufweitendem Querschnitt anschließen, der die Strömung verlangsamt und die Energie des mit hoher Geschwindigkeit durch den Drosselbereich strömenden Fluids aufnimmt. Der sich aufweitende Querschnitt kann beispielsweise eine sprunghafte oder kontinuierliche Querschnittserweiterung aufweisen. Bei einem derartigen Aufbau kann stromabwärts des Drosselelements ein Werkstoff mit geringerer Widerstandskraft als das Material des Drosselelements verwendet werden. Stromab des Drosselelements kann das Fluid beispielsweise in einer Kunststoffleitung oder einem Elastomerschlauch geführt werden. In einer alternativen Ausführung weist das strömungsführende Drosselelement einen ersten zylindrischen Querschnitt auf und daran stromabwärts angrenzenden zweiten kurzen, zylindrischen Querschnitt mit einem deutlich geringeren Querschnitt als der Drosselbereich auf. Dem Drosselbereich kann sich ein dritter Kanalabschnitt mit einem größeren Querschnitt, beispielweise mit einem Querschnitt gleich oder ähnlich dem Querschnitt des ersten Kanalabschnitts anschließen.

Gemäß einer günstigen Ausgestaltung des Wasserabscheiders kann das Drosselelement aus Metall oder Kunststoff oder Keramik gebildet sein. Die Verwendung von Metall erlaubt besonders vorteilhaft ein Drosselelement mit sehr feinen Strukturen, wie etwa sehr klein dimensionierten Engstellen, die in Kunststoff nur mit sehr hochwertigen und teuren Kunststoffmaterialien herzustellen sind.

Gemäß einer günstigen Ausgestaltung des Wasserabscheiders kann das Drosselelement für eine Strömungsgeschwindigkeit nahe der Schallgeschwindigkeit des Fluids, insbesondere mindestens 90% der Schallgeschwindigkeit, für besondere Betriebszustände ausgebildet sein. Durch das Einbetten des Drosselelements in den Wasserauslass kann das Drosselelement auch hohen Belastungen dauerhaft standhalten.

Gemäß einer günstigen Ausgestaltung des Wasserabscheiders kann das Drosselelement einen zylinderförmigen Außenmantel aufweisen. Diese Form ist günstig für ein Heißeinsatzverfahren, um das Drosselelement als Einlegeteil in den Wasserauslass einzubetten.

Besonders vorteilhaft ist eine Rändelstruktur oder andere Vertiefungen an dem Außenmantel des Drosselelements, um einen Formschluss mit dem Material des Wasserauslasses zu bilden.

Gemäß einer günstigen Ausgestaltung des Wasserabscheiders kann das Drosselelement einen zylinderförmigen Außenmantel aufweisen, der am Außenumfang ein oder mehrere umlaufende Nuten oder in axialer Richtung oder in einem Winkel zur Längsrichtung weisende Riefen oder Rändelstrukturen aufweist. Möglich sind auch gekrümmte Vertiefungen an der Mantelfläche oder einzelne Vertiefungen in Form von Bohrungen oder Eindellungen. Einzelne Formen davon oder eine Kombination der Formen ist vorteilhaft für ein Spritzgussverfahren, bei dem das Drosselelement als Einlegeteil in ein Spritzwerkzeug eingelegt wird und sich mit der strukturierten Außenfläche mit dem umgebenden Kunststoff verliersicher verkeilen kann.

Gemäß einer günstigen Ausgestaltung des Wasserabscheiders kann der Innenraum des Wasserabscheiders zur Drallabscheidung des Wassers ausgebildet sein. Vorteilhaft kann der Wasserabscheider im Innenraum ein Außenrohr aufweisen, das einen sich erweiternden Abscheidebereich für das Wasser aufweist. Weiterhin vorteilhaft kann der Wasserabscheider im Innenraum ein Innenrohr aufweisen, das einen sich erweiternden Verzögerungsbereich aufweist. Ebenso vorteilhaft kann der Wasserauslass mit dem Innenraum über einen trichterförmigen Bereich verbunden sein.

Nach einem weiteren Aspekt der Erfindung wird eine Verwendung eines erfindungsgemäßen Wasserabscheiders vorgeschlagen zur Gasstrombegrenzung in einer Drainageleitung, die aus einem Gasstrom extrahierte Flüssigkeit transportiert. Der Wasserabscheider umfasst einen strömungsführenden Innenraum und einen Wasserauslass, der an den Innenraum angeschlossen ist, wobei der Wasserauslass ein strömungsführendes Drosselelement aufweist, das als Einlegeteil ausgebildet und formschlüssig und/oder kraftschlüssig in den Wasserauslass eingebettet ist. Durch das Einbetten des Drosselelements in den Wasserauslass kann ein Verlust eines Anteils des Gasstroms, der mit dem abgeschiedenen Wasser aus dem Wasserauslass austritt, begrenzt werden.

Zusätzliche Dichtungen und Verbindungsmittel können eingespart werden. Die Verbindung zwischen Drosselelement und Wasserauslass ist vorteilhaft dauerfest auch bei hohen Belastungen.

Nach einem weiteren Aspekt der Erfindung wird ein Brennstoffzellensystem vorgeschlagen, mit einem Kathodenzuluftpfad und einem Kathodenabluftpfad einer Brennstoffzelleneinheit und mit wenigstens einem erfindungsgemäßen Wasserabscheider, wobei der wenigstens eine Wasserabscheider in dem Kathodenabluftpfad angeordnet und zur Luftstrombegrenzung in einem Drainagepfad vorgesehen ist.

In einer weiteren vorteilhaften Ausführung der Erfindung kann der erfindungsgemäße Wasserabscheider in dem Anodenkreislauf eines Brennstoffzellensystems angeordnet sein, um Wasser abzuscheiden, beispielsweise vor dem Eintritt in die Brennstoffzelle.

Vorteilhaft kann das Drosselelement einen Verlust der Abluft der Brennstoffzelleneinheit verringern, so dass eine von der Abluft angetriebene Turbine eines Turboladers mit hoher Effizienz betrieben werden kann.

Durch das Einbetten des Drosselelements in den Wasserauslass kann ein Verlust eines Anteils des Gasstroms, der mit dem abgeschiedenen Wasser aus dem Wasserauslass austritt, begrenzt werden. Zusätzliche Dichtungen und Verbindungsmittel können eingespart werden. Die Verbindung zwischen Drosselelement und Wasserauslass ist vorteilhaft dauerfest auch bei hohen Belastungen.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Figur 1: eine Seitenansicht eines Wasserabscheiders nach einem Ausführungsbeispiel der Erfindung mit teilweise aufgeschnittenem Wasserauslass;
- Figur 2: eine Schnittdarstellung des Wasserabscheiders mit einem Drosselelement nach Figur 1;
- Figur 3: ein vergrößertes Detail der Schnittdarstellung des Drosselelements aus Figur 2;
- Figur 4: eine Draufsicht auf den Wasserabscheider aus Figur 1 mit trichterförmigem Wasserauslass;
- Figur 5: eine isometrische Ansicht einer ersten Ausführung eines Drosselelements;
- Figur 6: eine Seitenansicht des Drosselelements aus Figur 5;
- Figur 7: ein Schnitt durch das Drosselelement aus Figur 5;
- Figur 8: eine isometrische Ansicht einer ersten Ausführung eines Drosselelements;
- Figur 9: eine Seitenansicht des Drosselelements aus Figur 8;
- Figur 10: ein Schnitt durch das Drosselelement aus Figur 8;
- Figur 11: eine isometrische Ansicht einer ersten Ausführung eines Drosselelements;
- Figur 12: eine Seitenansicht des Drosselelements aus Figur 11;
- Figur 13: ein Schnitt durch das Drosselelement aus Figur 11; und
- Figur 14: eine vereinfachte Darstellung eines Brennstoffzellensystems mit Kathodenzuluftpfad und Kathodenabluftpfad.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

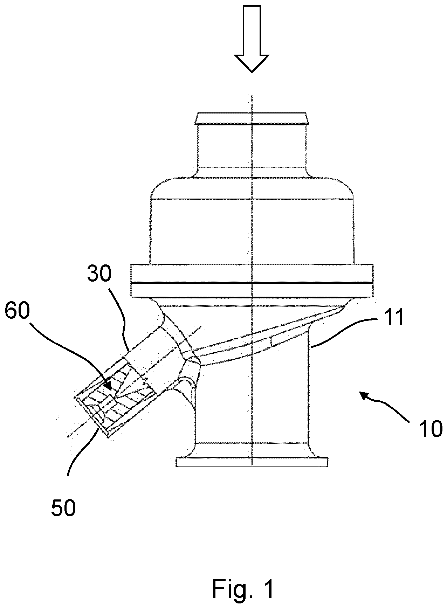

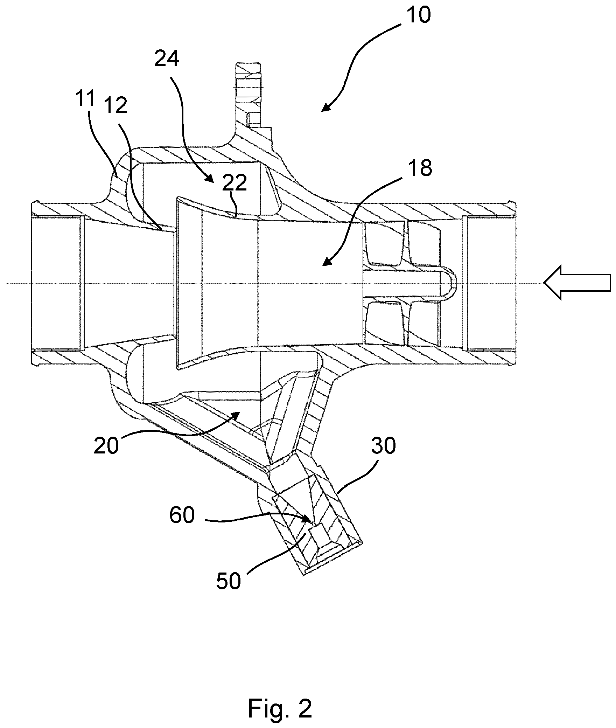

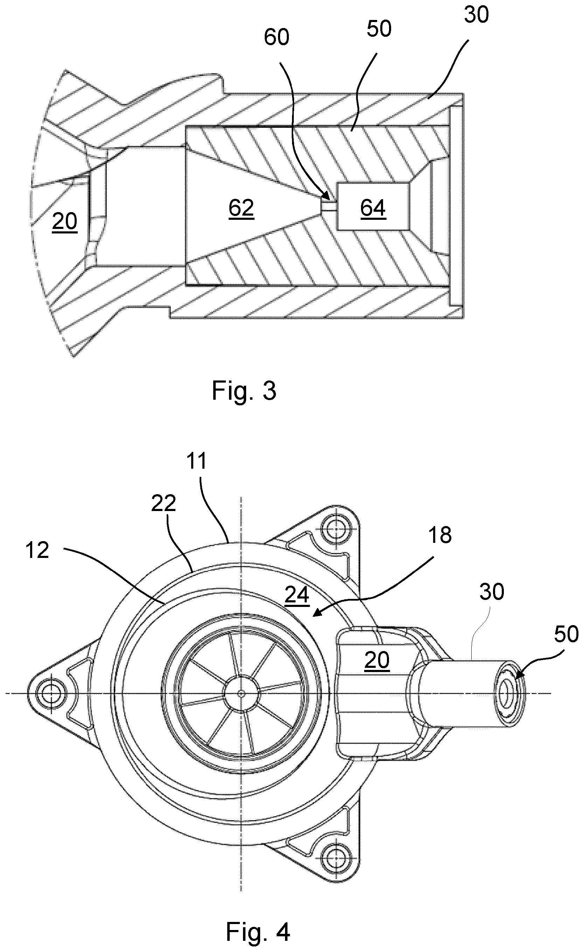

Zur Erläuterung der Erfindung zeigen Figuren 1 bis 3 ein Ausführungsbeispiel der Erfindung. Figur 1 zeigt einen Wasserabscheider 10 in einer senkrechten Anordnung in einer Seitenansicht mit teilweise aufgeschnittenem Wasserauslass 30. Der Einlass des Fluids ist in dieser Darstellung von oben, der Wasserauslass seitlich. Figur 2 zeigt eine Schnittdarstellung des Wasserabscheiders 10 in einer waagrechten Anordnung mit einem strömungsführenden Drosselelement 50 nach Figur 1. Der Einlass des Fluids ist in dieser Darstellung von rechts, der Wasserauslass nach unten. Figur 3 zeigt eine vergrößertes Detail der Schnittdarstellung des Drosselelements 50 aus Figur 2.

Der Wasserabscheider 10 ist günstigerweise als Drallabscheider ausgebildet und umfasst in einem Innenraum 18 eines Gehäuses 11 ein Innenrohr 12 und ein Außenrohr 22, welche in axialer Richtung aufeinanderfolgend angeordnet sind. Das Innenrohr 12 weist am Übergang zum Außenrohr 22 einen kleineren Durchmesser auf; als das Außenrohr 22. Das Außenrohr 22 weist den zapfenförmigen Wasserauslass 30 auf, wobei am freien Ende des Wasserauslasses 30 das Drosselelement 50 angeordnet ist, das als Einlegeteil ausgebildet und formschlüssig und/oder kraftschlüssig in den Wasserauslass 30 eingebettet ist.

Der Übergang zwischen Innenrohr 12 und Außenrohr 22 ist innerhalb eines Abscheidebereichs 24 des Wasserabscheiders 10 angeordnet, an den sich der zapfenförmige Wasserauslass 30 über einen trichterförmigen Bereich 20 anschließt. So kann abgeschiedenes Wasser gesammelt und durch die wirkende Schwerkraft zum Wasserauslass 30 gelangen.

Dies ist in Figur 4 im Detail dargestellt, die eine Draufsicht des Wasserabscheiders 10 aus Figur 2 mit dem trichterförmigem Bereich 20 zwischen Innenraum 18 und dem zapfenförmigen Wasserauslass 30 zeigt. Der Wasserauslass 30 erstreckt sich von der Mittellinie des Abscheiders radial nach außen. In der Einbaulage des Wasserabscheiders befindet sich der Auslass 30 am tiefsten Punkt im Umfang des Wasserabscheiders, wie beispielsweise in Fig. 2 dargestellt.

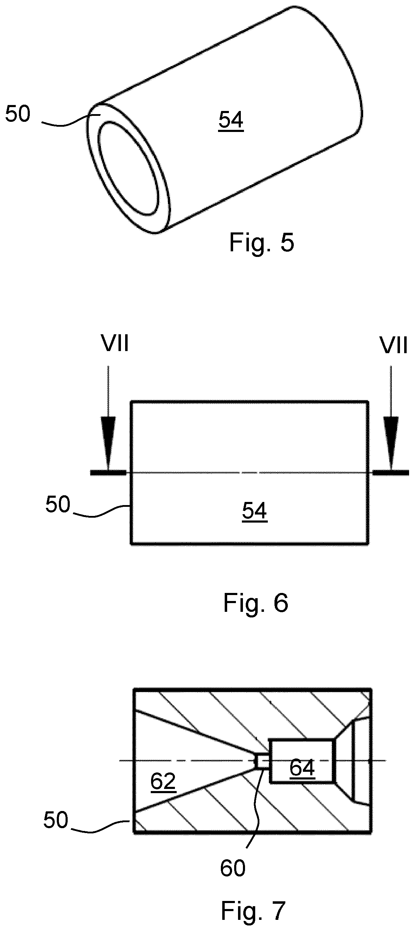

Figuren 5 bis 7 zeigen ein erstes Ausführungsbeispiel eines Drosselelements 50, wobei Figur 5 eine isometrische Ansicht, Figur 6 eine Seitenansicht und Figur 7 eine Ansicht auf eine Schnittebene entlang der in Figur 6 eingezeichneten Linie VII-VII durch das Drosselelement 50 aus Figur 5 zeigt.

Das Drosselelement 50 weist in einem in Strömungsrichtung ersten Kanalabschnitt 62 einen sich verjüngenden, insbesondere konischen, Einströmquerschnitt auf, dem sich der eigentliche Drosselbereich der Engstelle 60 anschließt. Dieser Drosselbereich kann im Verhältnis zur Länge des gesamten Drosselelements 50 als kurzer, zylindrischer Abschnitt ausgebildet sein. Stromabwärts des Drosselbereichs mit der Engstelle 60 schließt sich ein zylindrischer Kanalabschnitt 64 mit gegenüber der Engstelle aufgeweitetem Querschnitt an. Der Querschnitt des Kanalabschnitts 64 weitet sich in Strömungsrichtung zum Ende des Drosselelements 50 in Abschnitten weiter auf.

Im Innenbereich ist die Engstelle 60 zwischen zwei Kanalbereichen 62, 64 angeordnet. Der Außenmantel 54 des Drosselelements 50 ist zylindrisch und glatt ausgebildet. Diese Ausgestaltung ist möglich für ein Heißeinsatzverfahren zum Einbetten des Drosselelements 50 in den Wasserauslass für den Fall, dass das Drosselelement zumindest teilweise in Längsrichtung vom Material des Wasserauslasses umschlossen ist.

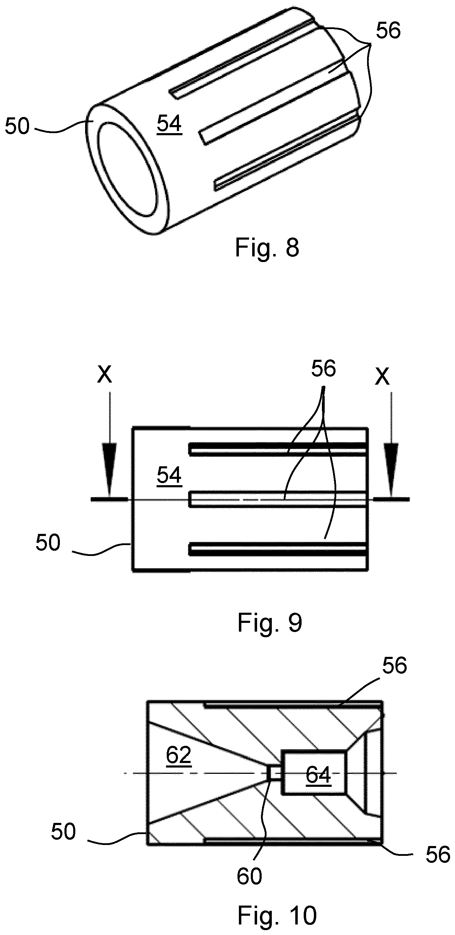

Figuren 8 bis 10 zeigen ein weiteres Ausführungsbeispiel eines Drosselelements 50, wobei Figur 8 eine isometrische Ansicht, Figur 9 eine Seitenansicht und Figur 10 eine Draufsicht auf eine Schnittebene entlang der in Figur 9 eingezeichneten Linie X-X durch das Drosselelement 50 aus Figur 8 zeigt.

Im Innenbereich ist die Engstelle 60 zwischen zwei Kanalbereichen 62, 64 angeordnet. Der Außenmantel 54 des Drosselelements 50 ist zylindrisch ausgebildet und weist axial gerichtete Riefen 56 auf. Diese Ausgestaltung ist günstig für ein Spritzgussverfahren zum Einbetten des Drosselelements 50 in den Wasserauslass.

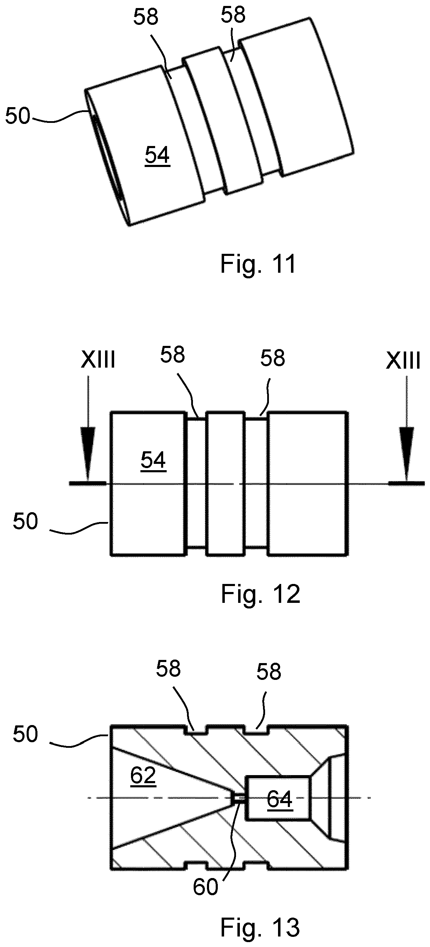

Figuren 11 bis 13 zeigen ein weiteres Ausführungsbeispiel eines Drosselelements 50, wobei Figur 11 eine isometrische Ansicht, Figur 12 eine Seitenansicht und Figur 13 eine Draufsicht auf eine Schnittebene entlang der in Figur 12 eingezeichneten Linie XIII-XIII durch das Drosselelement 50 aus Figur 11 zeigt.

Im Innenbereich ist die Engstelle 60 zwischen zwei Kanalbereichen 62, 64 angeordnet. Der Außenmantel 54 des Drosselelements 50 ist zylindrisch ausgebildet und weist umlaufende Nuten 58 auf. Diese Ausgestaltung ist günstig für ein Spritzgussverfahren zum Einbetten des Drosselelements 50 in den Wasserauslass.

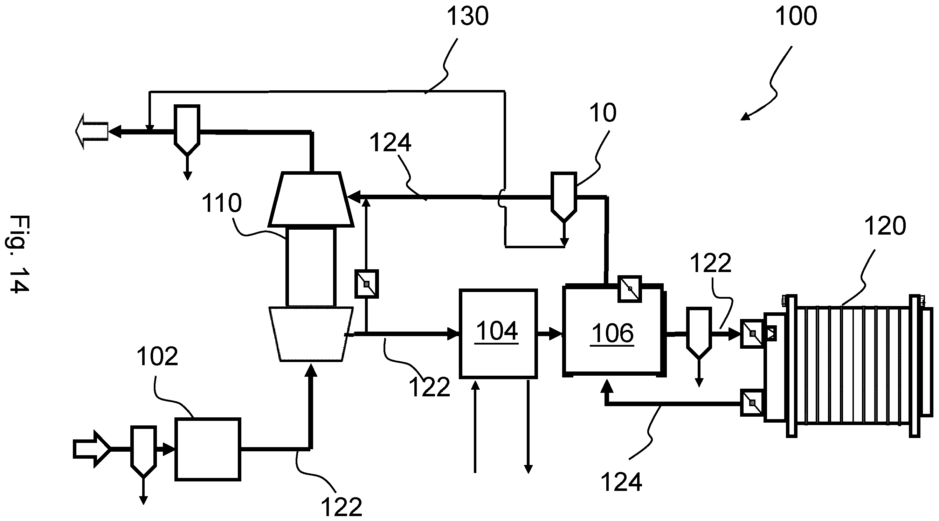

Figur 14 zeigt eine vereinfachte Darstellung eines an sich bekannten Brennstoffzellensystems 100 mit einer Brennstoffzelleneinheit 120 mit einem Kathodenzuluftpfad 122 und Kathodenabluftpfad 124. Über den Kathodenzuluftpfad 122 wird der Brennstoffzelleneinheit 120 Umgebungsluft zugeführt, die über eine Reinigungsstufe 102 gefiltert und über einen Kompressor eines Turboladers 110 angesaugt und verdichtet wird. Die verdichtete Luft wird in einem Wärmetauscher 104 abgekühlt und mit einem Befeuchter 106 mit definierter Feuchte versehen.

In der Brennstoffzelleneinheit 120 reagiert der Luftsauerstoff mit Wasserstoff zu Wasser, das als Luft/Wassergemisch über den Kathodenabluftpfad 124 aus der Brennstoffzelleneinheit 120 abgeführt wird. Einen Teil des Wassers kann die Kathodenabluft im Befeuchter 106 an die Kathodenzuluft abgeben. Stromab des Befeuchters ist ein Wasserabscheider 10 angeschlossen, der entsprechend den vorstehenden Ausführungsbeispielen ausgebildet sein kann und insbesondere ein in den Wasserauslass des Wasserabscheiders 10 eingebettetes strömungsführendes Drosselelement 50 aufweist. Das abgeschiedene Wasser wird in einem Drainagepfad 130 abgeführt, während die getrocknete Kathodenabluft der Turbine des Turboladers 110 zugeführt wird.

Die Positionierung des Wasserabscheiders 10 stromauf der Turbine des Turboladers 110 ist besonders günstig. Durch das Drosselelement 50 kann der Verlust an Kathodenabluft vermindert werden, was energetisch günstig für den Betrieb des Turboladers 110 ist. Das Drosselelement 50 vermindert den Fluidstrom im Drainagepfad 130, der ohne das Drosselelement aufgrund der unterschiedlichen Druckniveaus stromauf und stromab der Turbine unzulässig groß wäre.

Es sind im Brennstoffzellensystem 100 weitere nicht näher bezeichnete Wasserabscheider eingezeichnet. Diese können ebenfalls ein derartiges Drosselelement aufweisen, oder ohne ein solches ausgebildet sein.

In einem derartigen System sind die Belastungen des Wasserabscheiders 10 im Betrieb hoch. Es kann ein erheblicher Druckabfall am Wasserabscheider 10 bis zu mehreren bar auftreten. Die durch den Wasserabscheider 10 strömende Kathodenabluft kann in diesem Bereich eine Geschwindigkeit nahe der Schallgeschwindigkeit des Fluids, insbesondere mindestens 90% der Schallgeschwindigkeit, erreichen oder die Schallgeschwindigkeit überschreiten, wobei Temperaturen bis 100°C möglich sind.

Durch die Verwendung eines Wasserabscheiders 10 mit im Wasserauslass eingebettetem Drosselelement 50 kann vorteilhaft trotz derartig hohen Belastungen ein stabiler dauerhafter Betrieb erreicht werden. Das Drosselelement 50 kann aus widerstandsfähigem Material ausgebildet sein, während für den Wasserabscheider 10 weniger hochwertiges Material verwendet werden kann.

## Patentansprüche

1. Wasserabscheider (10), umfassend einen strömungsführenden Innenraum (18) und einen Wasserauslass (30), der an den Innenraum (18) angeschlossen ist, wobei der Wasserauslass (30) ein strömungsführendes Drosselelement (50) aufweist, **dadurch gekennzeichnet, dass** das Drosselelement (50) als Einlegeteil ausgebildet und formschlüssig und/oder kraftschlüssig in den Wasserauslass (30) eingebettet ist.

2. Wasserabscheider nach Anspruch 1, wobei das Drosselelement (50) mittels eines Heißeinsatzverfahrens oder Spritzgussverfahrens in den Wasserauslass (30) integriert ist.

3. Wasserabscheider nach Anspruch 1 oder 2, wobei das Drosselelement (50) eine Engstelle (60) mit einem Durchmesser zwischen 1 mm und 4 mm, insbesondere zwischen 1,5 mm und 3 mm, aufweist.

4. Wasserabscheider nach einem der vorhergehenden Ansprüche, wobei das Drosselelement (50) aus Metall oder Kunststoff oder Keramik gebildet ist.

5. Wasserabscheider nach einem der vorhergehenden Ansprüche, wobei das Drosselelement (50) einen zylinderförmigen Außenmantel (54) aufweist.

6. Wasserabscheider nach Anspruch 5, wobei der zylinderförmige Außenmantel (54) am Außenumfang in axialer Richtung weisende Riefen (56) oder ein oder mehrere umlaufende Nuten (58) oder eine Rändelstruktur aufweist.

7. Wasserabscheider nach einem der vorhergehenden Ansprüche, wobei der Wasserauslass (30) tangential in Drallrichtung oder radial nach außen und in einem Winkel zur Längsachse des Wasserabscheiders angeordnet ist.

8. Wasserabscheider nach einem der vorhergehenden Ansprüche, wobei der Wasserauslass (30) mit dem Innenraum (18) über einen trichterförmigen Bereich verbunden ist.

9. Verwendung eines Wasserabscheiders (10) nach einem der vorhergehenden Ansprüche, zur Gasstrombegrenzung in einem Drainagepfad (130), die aus einem Gasstrom extrahierte Flüssigkeit transportiert.

10. Brennstoffzellensystem (100) mit einem Kathodenzuluftpfad (122) und einem Kathodenabluftpfad (124) einer Brennstoffzelleneinheit (120) und mit wenigstens einem Wasserabscheider (10) nach einem der Ansprüche 1 bis 8, wobei der wenigstens eine Wasserabscheider (10) in dem Kathodenabluftpfad (124) angeordnet und zur Luftstrombegrenzung in einem Drainagepfad (130) vorgesehen ist.

## Claims

1. A water separator (10), comprising a flow-guiding interior space (18) and a water outlet (30) connected to the interior space (18), wherein the water outlet (30) features a flow-guiding throttle element (50), **characterized in that** the throttle element (50) is designed as an insertion part and incorporated in a positive and/or non-positive manner into the water outlet (30).

2. The water separator according to claim 1, wherein the throttle element (50) is integrated into the water outlet (30) using a hot-insertion process or injection molding process.

3. The water separator according to claim 1 or 2, wherein the throttle element (50) features a bottleneck (60) with a diameter between 1 mm and 4 mm, in particular between 1.5 mm and 3 mm.

4. The water separator according to one of the preceding claims, wherein the throttle element (50) is made of metal or plastic material or ceramic.

5. The water separator according to one of the preceding claims, wherein the throttle element (50) features a cylindrical outer casing (54).

6. The water separator according to claim 5, wherein the cylindrical outer casing (54) features grooves (56) on the outer periphery pointing in the axial direction, or one or a plurality of surrounding grooves (58), or a knurled structure.

7. The water separator according to one of the preceding claims, wherein the water outlet (30) is disposed tangentially in the direction of twist or radially outwards and in an angle to the longitudinal axis of the water separator.

8. The water separator according to one of the preceding claims, wherein the water outlet (30) is connected to the interior space (18) via a funnel-shaped area.

9. A use of a water separator (10) according to one of the preceding claims, for limiting gas flow in a drainage path (130) conveying liquid extracted from a gas flow.

10. A fuel cell system (100) with a cathode supply air path (122) and a cathode exhaust air path (124) of a fuel cell unit (120) and with at least one water separator (10) according to one of claims 1 to 8, wherein the at least one water separator (10) is disposed in the cathode exhaust air path (124) and provided for limiting airflow in a drainage path (130).

## Revendications

1. Séparateur d'eau (10), comprenant un espace intérieur (18) guidant l'écoulement et une sortie d'eau (30) raccordée à l'espace intérieur (18), dans lequel la sortie d'eau (30) présente un élément d'étranglement (50) guidant l'écoulement, **caractérisé en ce que** l'élément d'étranglement (50) est réalisé sous la forme d'une pièce d'insertion et incorporé par engagement positif et/ou par adhérence dans la sortie d'eau (30).

2. Séparateur d'eau selon la revendication 1, dans lequel l'élément d'étranglement (50) est intégré dans la sortie d'eau (30) par un processus d'insertion à chaud ou un processus de moulage par injection.

3. Séparateur d'eau selon la revendication 1 ou 2, dans lequel l'élément d'étranglement (50) présente un étranglement (60) ayant un diamètre compris entre 1 mm et 4 mm, notamment entre 1,5 mm et 3 mm.

4. Séparateur d'eau selon l'une quelconque des revendications précédentes, dans lequel l'élément d'étranglement (50) est réalisé en métal ou en matière plastique ou en céramique.

5. Séparateur d'eau selon l'une quelconque des revendications précédentes, dans lequel l'élément d'étranglement (50) présente une enveloppe extérieure (54) de forme cylindrique.

6. Séparateur d'eau selon la revendication 5, dans lequel l'enveloppe extérieure (54) de forme cylindrique présente sur la circonférence extérieure des stries (56) orientées en direction axiale ou une ou plusieurs rainures (58) circonférentielles ou une structure moletée.

7. Séparateur d'eau selon l'une quelconque des revendications précédentes, dans lequel la sortie d'eau (30) est disposée tangentiellement dans le sens de la rotation ou radialement vers l'extérieur et selon un angle par rapport à l'axe longitudinal du séparateur d'eau.

8. Séparateur d'eau selon l'une quelconque des revendications précédentes, dans lequel la sortie d'eau (30) est reliée à l'espace intérieur (18) par une zone en forme d'entonnoir.

9. Utilisation d'un séparateur d'eau (10) selon l'une quelconque des revendications précédentes, pour limiter le flux de gaz dans une voie de drainage (130) transportant du liquide extrait d'un flux de gaz.

10. Système de pile à combustible (100) avec un trajet d'air d'alimentation de cathode (122) et un trajet d'air d'évacuation de cathode (124) d'une unité de pile à combustible (120) et avec au moins un séparateur d'eau (10) selon l'une quelconque des revendications 1 à 8, dans lequel le séparateur d'eau (10), au moins au nombre d'un, est disposé dans le chemin d'air d'évacuation de cathode (124) et prévu dans un chemin de drainage (130) pour limiter le flux d'air.
